# EUROPEAN PATENT SPECIFICATION

(11) **EP 4 082 826 B1**
(45) Date of publication and mention of the grant of the patent: **20.03.2024**
(21) Application number: 21171048.8
(22) Date of filing: 28.04.2021
(51) Int. Cl.: B60N 2/07

(54) **A SEAT RAIL SYSTEM FOR A VEHICLE AND A VEHICLE COMPRISING A SEAT RAIL SYSTEM**
SITZSCHIENENSYSTEM FÜR EIN FAHRZEUG UND FAHRZEUG MIT EINEM SITZSCHIENENSYSTEM
SYSTÈME DE RAIL DE SIÈGE POUR UN VÉHICULE ET VÉHICULE COMPRENANT UN SYSTÈME DE RAIL DE SIÈGE

(43) Date of publication of application: 02.11.2022
(73) Proprietor: Ningbo Geely Automobile Research & Development Co., Ltd., Ningbo, Zhejiang 315336 (CN); Zhejiang Geely Holding Group Co., Ltd., Hangzhou, Zhejiang 310051 (CN)
(72) Inventor: JONSSON, Tony, 441 91 Alingsås (SE)
(74) Representative: Zacco Sweden AB

(56) References cited:
- EP-A1- 3 484 744
- US-B2- 6 869 057

## Description

### TECHNICAL FIELD

The present invention relates to a seat rail system for vehicles. The seat rail system comprises an upper rail and a stationary lower rail attached to a floor structure of the vehicle. The upper rail is configured for being attached to a vehicle seat and the upper rail is movably arranged in relation to the lower rail in a longitudinal vehicle direction. The disclosure further relates to a vehicle comprising a seat rail system.

### BACKGROUND

Vehicle seats are commonly arranged with a seat rail system for a mechanical sliding connection between the vehicle seat and a floor structure of the vehicle. Conventional seat rail systems comprise a pair of two interconnected rails that are linearly slidable relative to each other, where a lower rail is stationary attached to the floor structure and an upper rail is fastened to the vehicle seat. With the seat rail systems, the vehicle seat is adjustable in a longitudinal vehicle direction for a convenient positioning of the vehicle seat. Traditional seat rail systems commonly have complex load paths from the floor structure to the vehicle seat, which is negative when the seat rail system is exerted to forces in a vehicle impact event. The complex load paths are resulting in heavy and costly constructions of the seat rail systems to achieve desired performance. This is especially of concern if the vehicles are equipped with vehicle seats having integral seat belt systems only connected to the vehicle seats, where all impact forces need to be absorbed by the vehicle seat construction.

There is thus a need for an improved seat rail system having the ability to absorb load in vehicle impact events efficiently for improved safety of vehicle occupants, where the seat rail system is fulfilling legal requirements, is lightweight in construction, and is having a low cost design.

Patent publication EP 3484744 A1 discloses a motor-vehicle seat longitudinal adjuster that includes a seat part seat rail and a vehicle structure seat rail. The seat rails are slidable relative to each other in a longitudinal direction and engage each other forming an inner channel. An anchor, fastened to the second seat rail, is arranged in the inner channel. A reinforcing profiled element, fastened to the first seat rail, is arranged in the inner channel. The reinforcing profiled element and the anchor are spaced apart from each other and they engage with each other in response to a defined application of force.

### SUMMARY

An object of the present invention is to provide a seat rail system for vehicles and a vehicle comprising a seat rail system, where the previously mentioned problems are avoided. This object is at least partly achieved by the features of the independent claims. The dependent claims contain further developments of the seat rail system.

The invention concerns a seat rail system for a vehicle. The seat rail system comprises an upper rail and a stationary lower rail attached to a floor structure of the vehicle. The upper rail is configured for being attached to a vehicle seat and the upper rail is movably arranged in relation to the lower rail in a longitudinal vehicle direction. The seat rail system further comprises an elongated load member attached to the lower rail, where an upper part of the load member is extending into a lower portion of the upper rail. One or more lower parts of the load member are extending through the floor structure. The load member is configured for being directly in engagement with the floor structure and the lower portion in a vehicle impact event for establishing a load path from the floor structure to the upper rail via the load member.

Advantages with these features are that with the load member connected to both the floor structure and to the lower portion, the seat rail system has the ability to absorb loads efficiently in the vehicle impact event for increased safety of vehicle occupants. The load path from the floor structure to the upper rail via the load member is preventing large deformations of the rails through the anchoring of the upper rail to the floor structure via the load member. The simple and efficient construction of the seat rail system with the load member is providing a straight symmetrical load path all the way from the floor structure to the vehicle seat via the upper rail, allowing a compact construction of the system with low height and low weight at a low cost. Through the interaction between the floor structure and the upper rail via the load member, forces are efficiently built up in the system in the vehicle impact event for a high system stiffness that is preventing large deformations.

According to an aspect of the invention the one or more lower parts of the load member are extending through corresponding openings of the floor structure. The extension of the lower parts through the openings is securing a firm engagement between the load member and the floor structure in the vehicle impact event. The openings are further simplifying the mounting of the lower rail to the floor structure.

According to another aspect of the invention the one or more lower parts of the load member are configured for being in engagement with a lower surface of the floor structure in the vehicle impact event. The lower surface is absorbing the forces occurring in the vehicle impact event, and the floor structure is of a strong and robust construction. The engagement of the lower parts and the floor structure is securing that the lower rail is not separated from the floor structure in the vehicle impact event.

According to an aspect of the invention the one or more lower parts of the load member are extending through a lower section of the lower rail. In this way, the load member can be connected to the lower rail for forming a strong construction. The load member is with this configuration forming a part of the lower rail that is simplifying the assembling of the system.

According to another aspect of the invention the upper part of the load member has an upper T-shaped cross-sectional configuration with a laterally extending upper flange. The upper flange is configured for being in engagement with the lower portion of the upper rail in the vehicle impact event. The upper flange is efficiently engaging the lower portion of the upper rail in the vehicle impact event for a secure and strong connection between the load member and the upper rail. The secure connection is preventing that the upper rail is separated from the lower rail in the vehicle impact event.

According to a further aspect of the invention the lower portion of the upper rail has a bell-shaped cross-sectional configuration forming a cavity. The cavity is configured for embracing the upper flange. The cavity is arranged around the upper flange of the load member for a simple and robust connection between the lower portion and the load member. The cavity is further allowing a longitudinal displacement of the upper rail in relation to the lower rail in normal operating conditions for positioning the vehicle seat, without any interaction between the load member and the lower portion.

According to an aspect of the invention the upper rail comprises a first side section and a second side section joined to each other. The cavity is formed between the first side section and the second side section. The first side section comprises a lateral inwardly projecting first flange and the second side section comprises a lateral inwardly projecting second flange. The first flange and the second flange are arranged below the upper flange and configured for being in engagement with the upper flange in the vehicle impact event. The side sections are providing a simple construction of the upper rail, where the cavity is formed by the joined sections. The side sections may be constituted by welded sheet metal parts that are forming the cavity, the first flange, and the second flange.

According to another aspect of the invention the one or more lower parts of the load member have lower T-shaped cross-sectional configurations with a laterally extending lower flange. The lower flange is configured for being in engagement with the floor structure in the vehicle impact event. The lower flange is efficiently engaging the floor structure in the vehicle impact event for a secure and strong connection between the load member and the floor structure. The secure connection through the lower flange is preventing that the lower rail is separated from the floor structure in the vehicle impact event.

According to a further aspect of the invention the load member comprises two joined material sections forming the upper and lower T-shaped cross-sectional configurations. The material sections each at least partly has a U-shape like cross-sectional configuration. This configuration is providing a simple and efficient way of manufacturing and assembling the load member.

According to an aspect of the invention the seat rail system further comprises laterally extending bearing structures. The bearing structures are attached to the upper rail and extending in opposite directions from the upper rail. The bearing structures are configured for movably engaging the lower rail. The bearing structures are providing a low-friction movable engagement between the upper rail and the lower rail.

According to another aspect of the invention the bearing structures are positioned above a lower end of the lower portion of the upper rail. This configuration is providing a compact and robust construction of the system.

According to a further aspect of the invention the lower end is formed by the first flange and the second flange. The first flange and the second flange are providing a robust construction of the lower end of the lower portion for a secure engagement with the upper flange of the load member in the vehicle impact event.

According to an aspect of the invention the bearing structures comprise bearings, and the lower rail comprises bearing surfaces laterally arranged on opposite sides of the load member. The bearings and the bearing surfaces are configured for interacting with each other when the upper rail is displaced in relation to the lower rail. The bearings may for example be roller bearings and the roller bearings may be provided with wheel elements or similar structures for rolling interaction with the bearing surfaces upon longitudinal displacement of the upper rail in relation to the lower rail. The bearings may alternatively be sliding bearings for sliding interaction with the bearing surfaces upon longitudinal displacement of the upper rail in relation to the lower rail.

According to another aspect of the invention the floor structure is an integrated structural part of a body-in-white structure of the vehicle. With the integrated floor structure, a strong construction of the system is achieved for efficiently absorbing loads in the vehicle impact event.

The invention further concerns a vehicle comprising the seat rail system.

### BRIEF DESCRIPTION OF DRAWINGS

The invention will be described in detail in the following, with reference to the attached drawings, in which
- Fig. 1: shows schematically, in a side view, a vehicle with a seat rail system having an upper rail attached to a vehicle seat and a lower rail attached to a floor structure, according to the disclosure,
- Fig. 2: shows schematically, in a perspective view from above, the seat rail system, according to the disclosure,
- Fig. 3: shows schematically, in an exploded perspective view, the seat rail system, according to the disclosure,
- Fig. 4: shows schematically, in a perspective view from above, the upper rail of the seat rail system, according to the disclosure,
- Fig. 5a-b: show schematically, in cross-sectional front views, the seat rail system in normal operating conditions and in a vehicle impact event, according to the disclosure,
- Fig. 6: shows schematically, in a perspective view from above, the lower rail of the seat rail system and the floor structure, according to the disclosure,
- Fig. 7a-c: show schematically, in perspective views from above, the lower rail of the seat rail system in different mounting positions in relation to the floor structure, according to the disclosure,
- Fig. 8: shows schematically, in a perspective view from below, the lower rail of the seat rail system and the floor structure, according to the disclosure, and
- Fig. 9: shows schematically, in a perspective view from above, the seat rail system with a drive mechanism, according to the disclosure.

### DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

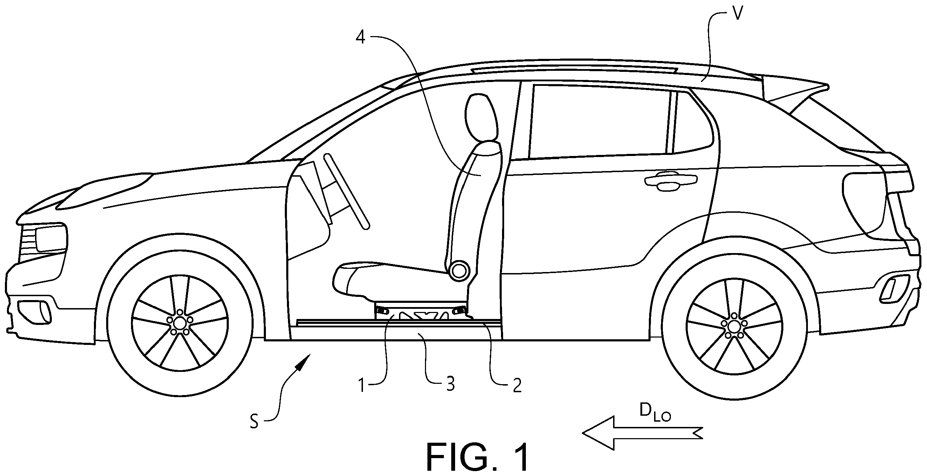

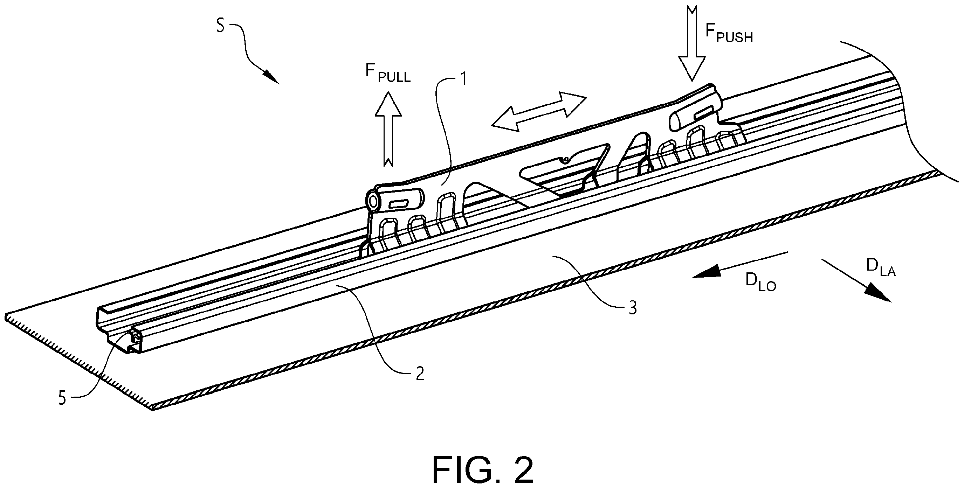

Figure 1 schematically shows a vehicle V with a seat rail system S. The seat rail system S comprises an upper rail 1 and a stationary lower rail 2, as illustrated in figures 1-3, 5a-b, and 9. The lower rail 2 is attached to a floor structure 3 of the vehicle V, and the upper rail 1 is attached to a vehicle seat 4. The upper rail 1 is movably arranged in relation to the lower rail 2 in a longitudinal vehicle direction D_{LO}, as indicated with the double arrow in figure 2, for a convenient adjustment and positioning of the vehicle seat 4 in relation to the floor structure 3. A lower base surface 2b of the lower rail 2 is positioned in connection to an upper surface 3c of the floor structure 3. The seat rail system S may be provided with suitable positioning and locking arrangements for positioning of the upper rail 1 in relation to the lower rail 2 when adjusting the vehicle seat 4. The floor structure 3 is forming part of the seat rail system S, as will be further described below. Usually, two parallel seat rail systems S are used for holding one vehicle seat 4. In figure 1, the seat rail system S is illustrated in connection to a front vehicle seat 4, but the seat rail system S may be used also for other adjustable vehicle seats.

A lateral vehicle direction D_{LA} is defined as a direction perpendicular to the longitudinal vehicle direction D_{LO}. The expressions upper, lower, upwards, and downwards, used in this context are referring to directions in relation to the seat rail system S when installed in the vehicle V in the position illustrated in figure 1.

The floor structure 3 is suitably an integrated structural part of a body-in-white structure of the vehicle V having an extension in the longitudinal vehicle direction D_{LO} and lateral vehicle direction D_{LO}, or essentially in the longitudinal vehicle direction D_{LO} and lateral vehicle direction D_{LO}, as indicated in for example figure 2. With a body-in-white structure of the vehicle V is meant a car body construction in which the car body's sheet metal components have been welded together, where any moving parts, the motor or engine, the chassis or the chassis sub-assemblies, and the trim have not yet been added to the car body construction. By attaching the lower rail 2 to the floor structure 3 integrated in the body-in-white structure of the vehicle V, a secure attachment of the lower rail 2 is accomplished. Non-illustrated additional fastening brackets or similar arrangements may for example be used for the attachment of the lower rail 2 to the floor structure 3, where screw fasteners or similar fastening devices can be used for a firm and secure attachment of the lower rail 2 to the floor structure 3 via the fastening brackets.

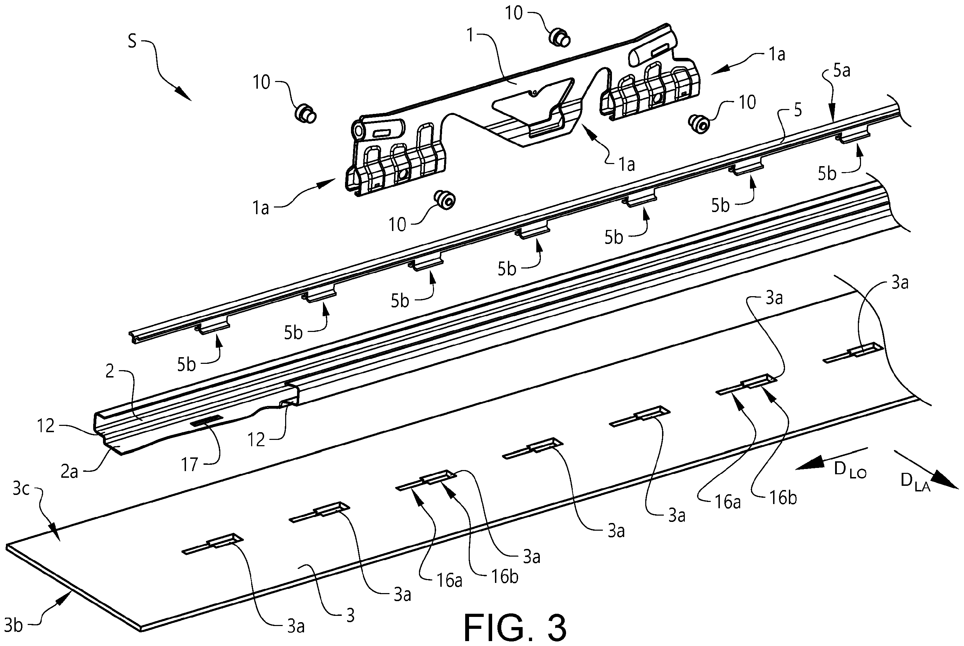

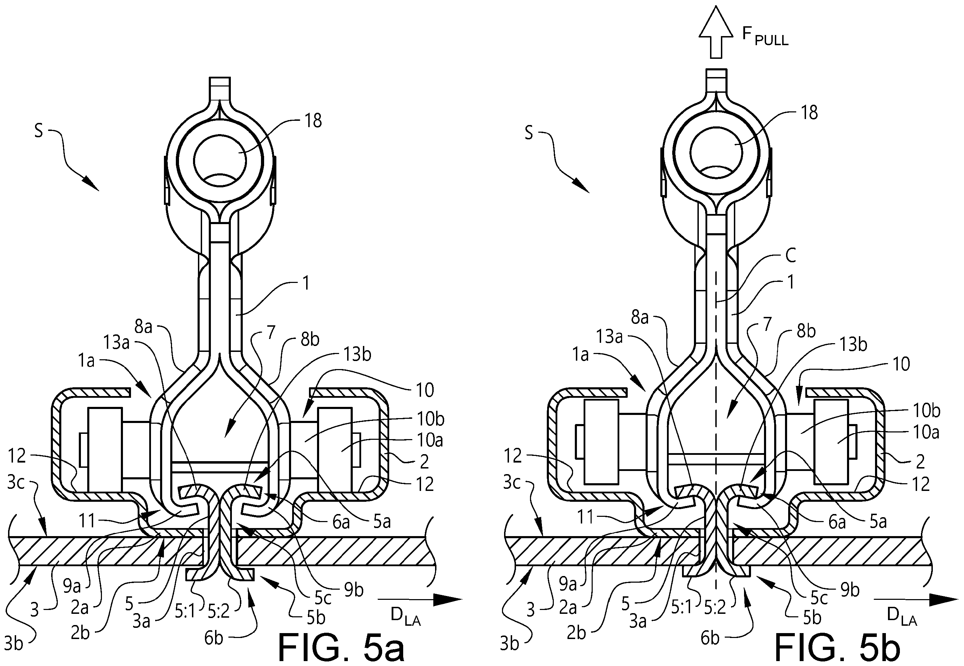

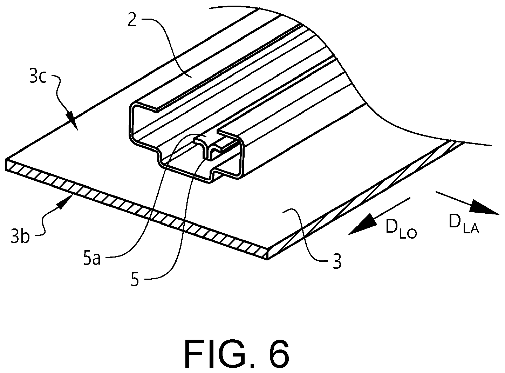

The seat rail system S further comprises an elongated load member 5 attached to the lower rail 2, as shown in for example figures 3 and 6. The load member 5 comprises an upper part 5a and one or more lower parts 5b. In the illustrated embodiment the upper part 5a is extending along the length of the load member 5, and a plurality of lower parts 5b are arranged in connection to the upper part 5a in a spaced apart configuration, as understood from for example figure 3. The upper part 5a of the load member 5 has an upper T-shaped cross-sectional configuration with a laterally extending upper flange 6a, as shown in figures 3, 5a-b, and 6. The one or more lower parts 5b of the load member 5 have lower T-shaped cross-sectional configurations with a laterally extending lower flange 6b, as shown in figures 3, 5a-b, and 8. A web section 5c of the load member 5 is connecting the upper flange 6a and the lower flange 6b. With a T-shaped cross-sectional configuration is meant a cross-sectional shape having a T-shape, or a shape similar to a T-shape such as the double hook like configuration shown in figures 5a-b. The cross-sectional configuration of the load member 5 where the upper parts 5a and the lower parts 5b correspond to each other is similar to an I-beam structure, or similar to an I-beam like structure, as shown in figures 5a-b.

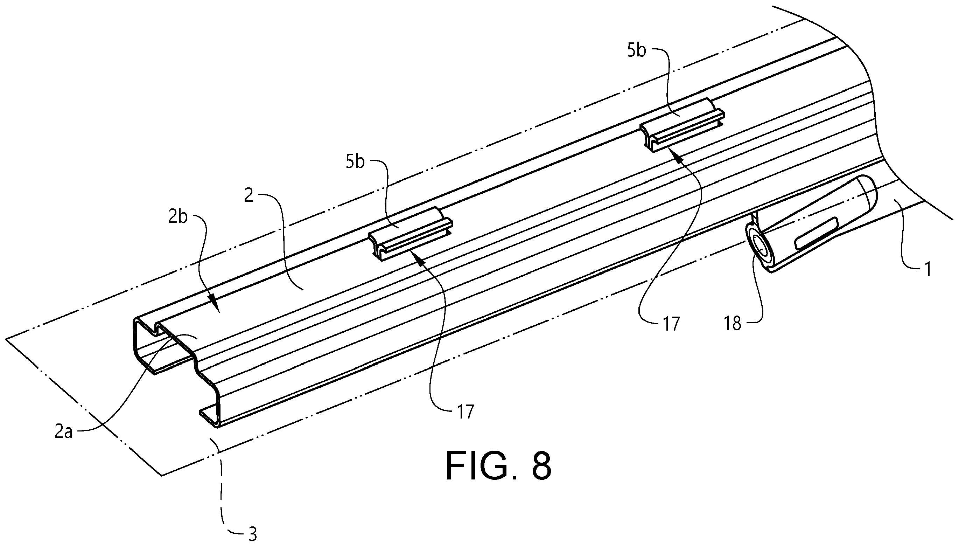

As shown in figure 8, a lower section 2a of the lower rail 2 is arranged with a plurality rail openings 17 arranged for receiving the plurality of lower parts 5b. The lower parts 5b are suitably positioned through corresponding rail openings 17 when mounting the load member 5 to the lower rail 2, and thereafter the lower parts 5b could be bent into the lower T-shaped cross-sectional configurations, as understood from figure 8. In this way, one or more lower parts 5b of the load member 5 are extending through the lower section 2a of the lower rail 2. The load member 5 and the lower rail 2 are made of suitable materials having high strength, as for example high-strength steel, polymers, composite materials, or other suitable materials or combinations of materials. The load member 5 is attached to the lower rail 2 with suitable fastening means, such as for example welds, glue, rivets, or screw fasteners.

In the illustrated embodiment, the load member 5 comprises two joined material sections 5:1,5:2 forming the upper and lower T-shaped cross-sectional configurations with the web section 5c in-between. The material sections 5:1,5:2 each at least partly has a U-shape, or U-shape like, cross-sectional configuration, as shown in figures 5a-b. This construction with the two joined material sections may simplify the mounting or assembling of the load member 5 to the lower rail 2, since each of the sections can be positioned into the rail openings 17 and thereafter attached to each other and to the lower rail 2.

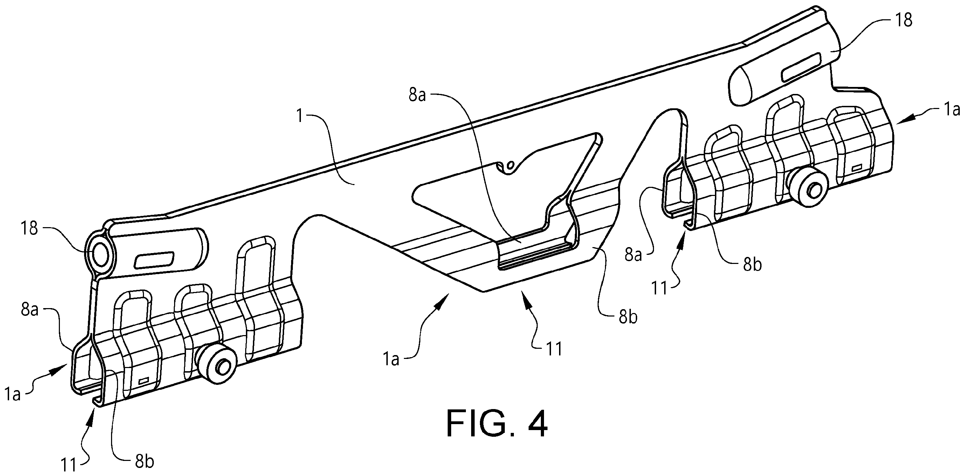

In an assembled state of the seat rail system S, as shown in for example figures 5a-b, the upper part 5a of the load member 5 is extending into a lower portion 1a of the upper rail 1. As understood from for example figure 4, the lower portion 1a may be sectioned into more than one structural part of the upper rail 1 for receiving the upper part 5a. In the illustrated embodiment, the upper rail 1 is arranged with three sections that together are forming the lower portion 1a and the upper part 5a of the load member 5 is extending into all three sections forming the lower portion 1a.

The upper rail 1 is further provided with upper fastening portions 18 for attaching the vehicle seat 4 to the upper rail 1, as shown in for example figures 4 and 5a-b. The fastening portions 18 may be arranged as openings that suitably are provided with threads for receiving a threaded fastening element for attaching the vehicle seat 4 to the upper rail. The vehicle seat 4 may be arranged with brackets or similar structures for the attachment to the upper rail 1 and engagement with the fastening element.

The seat rail system S further comprises laterally extending bearing structures 10, as shown in for example figures 3 and 5a-b. The bearing structures 10 are attached to the upper rail 1, and the bearing structures 10 are extending laterally in opposite directions from the upper rail 1. The bearing structures 10 may be arranged pairwise on opposite sides of the upper rail. The bearing structures 10 are configured for movably engaging the lower rail 2 and for providing a low-friction engagement between the upper rail 1 and the lower rail 2. The bearing structures 10 comprise bearings 10a, and the bearings 10a are suitably connected to the upper rail 1 via extending shaft structures 10b or similar arrangements for lateral positioning of the bearings 10a in relation to the lower rail 2.

The lower rail 2 comprises two bearing surfaces 12 laterally arranged on opposite sides of the load member 5, as shown in for example figures 5a-b. The bearings 10a and the bearing surfaces 12 are configured for interacting with each other when the upper rail 1 is displaced in relation to the lower rail 2. In the embodiment illustrated in figures 3 and 4, the first rail 1 comprises two pairs of bearing structures 10 arranged for interacting with the bearing surfaces 12. However, any suitable number of bearing structures 10 may be used. The bearings 10a may for example be roller bearings and the roller bearings may be provided with wheel elements or similar structures for rolling interaction with the bearing surfaces 12 upon longitudinal displacement of the upper rail 1 in relation to the lower rail 2. The bearings 10a may alternatively be sliding bearings for sliding interaction with the bearing surfaces 12 upon longitudinal displacement of the upper rail 1 in relation to the lower rail 2. Other types of bearings may also be used depending on the construction and design of the system. The bearing structures 10 are as illustrated in figures 5a-b positioned above a lower end 11 of the lower portion 1a of the upper rail 1 for a compact and robust construction of the system.

As shown in figures 5a-b, the one or more lower parts 5b of the load member 5 are extending through the floor structure 3 through corresponding openings 3a of the floor structure 3. The positions of the openings 3a are coinciding with the spacing of the lower parts 5b along the load member 5, as understood from figures 3 and 8. The openings 3a have narrowing configurations, and the openings 3a are tapering in the longitudinal vehicle direction D_{LO}. Suitable narrowing shapes are for example keyhole like shapes as illustrated in figure 3. However, any suitable narrowing shape may be used. The openings 3a in the illustrated embodiment are provided with narrow sections 16a and wide sections 16b.

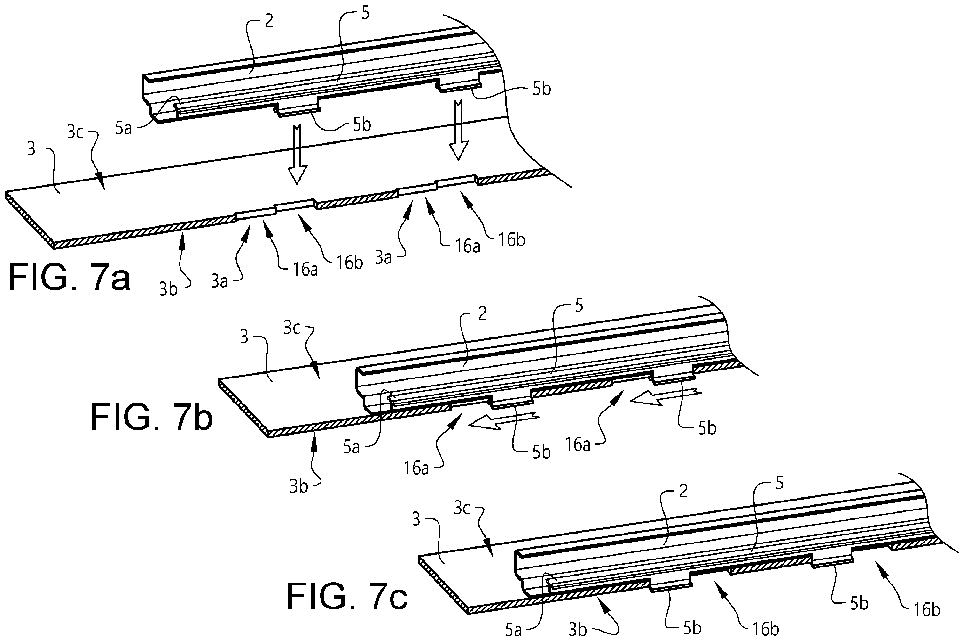

The wide sections 16b of the openings 3a have suitable sizes for receiving the lower parts 5b, and the lower parts 5b with the lower flange 6b are inserted into the wide sections 16b when mounting the lower rail 2 with the load member 5 to the floor structure 3, as illustrated in figure 7a. The lower parts 5a are entering the wide sections 16b in a downwards movement of the lower rail 2, as indicated with arrows in figure 7a. When inserted into the openings 3a, the lower parts 5b are extending through the floor structure 3 and the lower flanges 6b are positioned below the floor structure 3, as illustrated in figure 7b. To complete the mounting of the lower rail 2 to the floor structure 3, the lower rail 2 is after insertion into the wide sections 16b pushed in a direction towards the narrow sections 16a, as indicated with arrows in figure 7b. By pushing the lower rail 2 in the direction towards the narrow sections 16a, the lower flanges 6b will be positioned below the floor structure 3 into a final mounting position, as shown in figure 7c. When the lower flanges 6b are positioned below the floor structure 3 within the narrow sections 16a, the lower rail 2 is prevented from being displaced in an upwards direction due to engagement between the lower flanges 6b and a lower surface 3b of the floor structure 3, as understood from figures 5a-b. The second rail 2 may be further attached to the floor structure 3 via the non-illustrated fastening brackets, as described above. When the lower rail 2 is attached to the floor structure 3, the upper rail 1 and the vehicle seat 4 may be mounted to the lower rail 2.

The lower portion 1a of the upper rail 1 suitably has a bell-shaped cross-sectional configuration, or a bell-shape like cross-sectional configuration, and the lower portion is with this configuration formed with a cavity 7, as shown in for example figures 5a-b. The cavity 7 is configured for embracing the upper flange 6a of the load member 5.

The upper rail 1 comprises a first side section 8a and a second side section 8b. The side sections are suitably joined to each other with appropriate fastening means. The upper rail 1 may for example be made of two welded sheets that are forming the bell-shaped lower portion, and the welded sheets are forming lateral sides of the upper rail 1. The cavity 7 is formed between the first side section 8a and the second side section 8b, as shown in for example figures 5a-b.

The first side section 8a comprises a lateral inwardly projecting first flange 9a and the second side section 8b comprises a lateral inwardly projecting second flange 9b. The first flange 9a and the second flange 9b are forming the lower end 11 of the lower portion 1a. As shown in figures 5a-b, the first flange 9a and the second flange 9b are arranged below the upper flange 6a, and with this configuration, the first flange 9a and the second flange 9b are extending in inwards directions towards the load member 5. The first side section 8a and the second side section 8b are together with the first flange 9a and the second flange 9b forming the cavity 7, which is embracing the upper flange 6a of the load member 5.

The upper flange 6a comprises a first flange section 13a and a second flange section 13b, which are extending laterally on opposite sides of the web section 5c, as shown in figures 5a-b. The first flange 9a is arranged below the first flange section 13a and the second flange 9b is arranged below the second flange section 13b. In the illustrated embodiment, the first flange 9a is extending inwards towards the load member 5 from the first side section 8a with an upwards inclined configuration, and the second flange 9b is extending inwards towards the load member 5 from the second side section 8b with an upwards inclined configuration. The first flange section 13a is extending outwards towards the first side section 8a from the web section 5c with a downwards inclined configuration, and the second flange section 13b is extending outwards towards the second side section 8b from the web section 5c with a downwards inclined configuration. The first flange section 13a has suitably an extension parallel to, or essentially parallel to, the extension of the first flange 9a, and the second flange section 13b has suitably an extension parallel to, or essentially parallel to, the extension of the second flange 9b.

The load member 5 is configured for being directly in engagement with the floor structure 3 and the lower portion 1a in a vehicle impact event for establishing a load path from the floor structure 3 to the upper rail 1 via the load member 5. With a vehicle impact event is meant any situation where the vehicle V is exposed to impact forces, such as when the vehicle V is hitting an object or an object is hitting the vehicle V. Typical vehicle impact events are when the vehicle V is involved in a crash situation or collision, for example with another vehicle, or if the vehicle V leaves a roadway in a run-off-road collision or similar event. If the vehicle V is involved in a collision, impact forces will act on the vehicle seat 4 and the seat rail system S.

In a head-on collision, or in a collision where the front end of the vehicle V runs into an object, the front part of the upper rail 1 is pushed downwards towards the second rail 2 by a pushing force F_{PUSH} and the rear part of the upper rail 1 is pulled in a direction upwards away from the second rail 2 by a pulling force F_{PULL}, due to the forces acting on the vehicle seat 4 causing a rotational movement. In a rear-end collision, or in a collision where the rear end of the vehicle V runs into an object, the front part of the upper rail 1 is pulled in a direction upwards away from the second rail 2 by a pulling force F_{PULL} and the rear part of the upper rail 1 is pushed downwards towards the second rail 2 by a pushing force F_{PUSH}, due to the forces acting on the vehicle seat 4 causing a rotational movement. The pushing force F_{PUSH} and the pulling force F_{PULL} are schematically illustrated in figure 2.

The strength of the seat rail system S is critical when a pulling force F_{PULL} is acting on the upper rail 1, such as in the vehicle impact events described above. The pulling force F_{PULL} is illustrated with an arrow in figure 5b, indicating that a part of the upper rail 1 is pulled in a direction upwards away from the second rail 2. When the pulling force F_{PULL} is acting on a part of the seat rail system S, the load member 5 has the function to directly engage the floor structure 3 and directly engage the upper rail 1. In this way, the floor structure 3 is connected to the upper rail 1 via the load member 5 for establishing the load path from the floor structure 3 to the upper rail 1 via the load member 5. The load member 5 is establishing a strong and robust construction of the seat rail system S that is preventing large and unwanted deformations of the rails. With the system configuration, the load member 5 is directly in engagement with both the floor structure 3 and the lower portion 1a in the vehicle impact event. The established load path in the vehicle impact event from the floor structure 3 to the upper rail 1 via the load member 5, is through the engagement of the load member 5 following a centre line C of seat rail system S from the floor structure 3 to the upper rail for establishing a short load path compared to traditional systems, as indicated in figure 5b.

More specifically, the upper flange 6a is configured for being in engagement with the lower portion 1a of the upper rail 1 in the vehicle impact event. The first flange 9a is engaging the first flange section 13a in the vehicle impact event, and the second flange 9b is engaging the second flange section 13b in the vehicle impact event for a strong connection between the upper rail 1 and the load member 5. In this way, the first flange 9a and the second flange 9b are configured for being in engagement with the upper flange 6a. As understood from figure 5b, the parts involved are arranged as hook-like elements that are interacting with each other in the vehicle impact event, preventing that the upper rail 1 is separated from the lower rail 2 due to the connection of the load member 5 to the lower portion 1a. In the vehicle impact event, the upper rail 1 is pulled a small distance upwards away from the lower rail 2 due to minimal play between parts involved. As shown in figure 5a, there is a small play between the upper flange 6a and the respective first flange 9a and the second flange 9b in normal operating conditions, which is allowing the movement of the upper rail 1 in relation to the lower rail 2 in the longitudinal vehicle direction D_{LO} for the positioning of the vehicle seat 4 relative to the floor structure 3.

In a similar way, the one or more lower parts 5b of the load member 5 are configured for being in engagement with the lower surface 3b of the floor structure 3 in the vehicle impact event. The lower flange 6b is engaging the lower surface 3b of the floor structure 3 in the vehicle impact event for a strong connection between the floor structure 3 and the load member 5. As understood from figure 5b, the lower flange 6b is interacting with the floor structure 3 preventing that the lower rail 2 is separated from the floor structure 3. As shown in figure 5b, the lower flanges 6b of the lower parts 5b are arranged as hook-like elements that are interacting with the floor structure 3 in the vehicle impact event, preventing that the lower rail 2 is separated from the floor structure 3 due to the connection of the load member 5 to the floor structure 3. In the vehicle impact event, the lower rail 2 may be pulled a small distance upwards away from the floor structure 3 due to a small play between the lower flange 6b and the lower surface 3b of the floor structure 3. The small play between the lower flange 6a and the lower surface 3b of the floor structure 3 in normal operating conditions is allowing the mounting of the upper rail 2 to the floor structure, as described above. The construction of the seat rail system S is providing a straight symmetrical load path all the way from the floor structure 3 to the vehicle seat via the upper rail 1, allowing a compact construction of the system with low height and low weight.

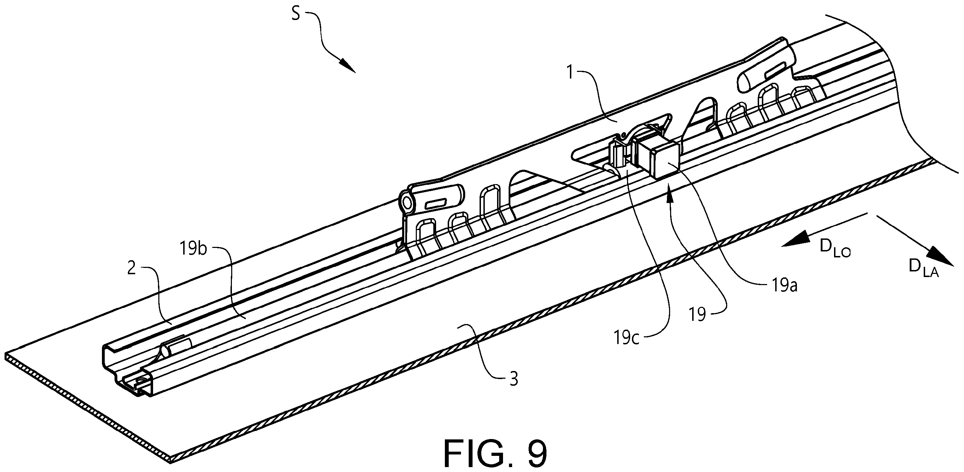

As illustrated in figure 9, the seat rail system S may further be provided with a drive mechanism 19 for positioning the upper rail 1 in relation to the lower rail 2. The drive mechanism may comprise an electric motor 19a and be configured as a worm drive mechanism. The worm drive mechanism may comprise an elongated threaded rod 19b connected to the lower rail 2 that is interacting with a worm gear 19c arranged on the upper rail 1. It should be understood that the drive mechanism 19 could have other suitable constructions, such as for example a linear actuator or ball screw mechanism. It will be appreciated that the above description is merely exemplary in nature and is not intended to limit the present invention its application or uses. While specific examples have been described in the specification and illustrated in the drawings, it will be understood by those of ordinary skill in the art that various changes may be made and equivalents may be substituted for elements thereof without departing from the scope of the present invention as defined in the claims. Furthermore, modifications may be made to adapt a particular situation or material to the teachings of the present invention without departing from the scope thereof.

Therefore, it is intended that the present invention not be limited to the particular examples illustrated by the drawings and described in the specification as the best mode presently contemplated for carrying out the teachings of the present invention but that the scope of the present invention will include any embodiments falling within the appended claims. Reference signs mentioned in the claims should not be seen as limiting the extent of the matter protected by the claims, and their sole function is to make claims easier to understand.

### REFERENCE SIGNS

- 1:: Upper rail
- 2:: Lower rail
- 2a:: Lower section
- 2b:: Lower base surface
- 3:: Floor structure
- 3a:: Opening
- 3b:: Lower surface
- 3c:: Upper surface
- 4:: Vehicle seat
- 5:: Load member
- 5a:: Upper part
- 5b:: Lower part
- 5c:: Web section
- 6a:: Upper flange
- 6b:: Lower flange
- 7:: Cavity
- 8a:: First side section
- 8b:: Second side section
- 9a:: First flange
- 9b:: Second flange
- 10:: Bearing structure
- 10a:: Bearing
- 10b:: Shaft structures
- 11:: Lower end
- 12:: Bearing surface
- 13a:: First flange section
- 13b:: Second flange section
- 16a:: Narrow section
- 16b:: Wide section
- 17:: Rail opening
- 18:: Fastening portions
- 19:: Drive mechanism
- 19a:: Electric motor
- 19b:: Threaded rod
- 19c:: Worm gear

- C:: Centre line
- D_{LA}:: Lateral vehicle direction
- D_{LO}:: Longitudinal vehicle direction
- F_{PULL}:: Pulling force
- F_{PUSH}:: Pushing force
- S:: Seat rail system
- V:: Vehicle

## Claims

1. A seat rail system (S) for a vehicle (V), wherein the seat rail system (S) comprises an upper rail (1) and a stationary lower rail (2) attached to a floor structure (3) of the vehicle (V), wherein the upper rail (1) is configured for being attached to a vehicle seat (4), wherein the upper rail (1) is movably arranged in relation to the lower rail (2) in a longitudinal vehicle direction (D_{LO}), wherein the seat rail system (S) further comprises an elongated load member (5) attached to the lower rail (2), wherein an upper part (5a) of the load member (5) is extending into a lower portion (1a) of the upper rail (1),
**characterized in that** one or more lower parts (5b) of the load member (5) are extending through the floor structure (3), wherein the load member (5) is configured for being directly in engagement with the floor structure (3) and the lower portion (1a) in a vehicle impact event for establishing a load path from the floor structure (3) to the upper rail (1) via the load member (5).

2. The seat rail system (S) according to claim 1,
**characterized in that** the one or more lower parts (5b) of the load member (5) are extending through corresponding openings (3a) of the floor structure (3).

3. The seat rail system (S) according to claim 1 or 2,
**characterized in that** the one or more lower parts (5b) of the load member (5) are configured for being in engagement with a lower surface (3b) of the floor structure (3) in the vehicle impact event.

4. The seat rail system (S) according to any preceding claim,
**characterized in that** the one or more lower parts (5b) of the load member (5) are extending through a lower section (2a) of the lower rail (2).

5. The seat rail system (S) according to any preceding claim,
**characterized in that** the upper part (5a) of the load member (5) has an upper T-shaped cross-sectional configuration with a laterally extending upper flange (6a), wherein the upper flange (6a) is configured for being in engagement with the lower portion (1a) of the upper rail (1) in the vehicle impact event.

6. The seat rail system (S) according to claim 5,
**characterized in that** the lower portion (1a) of the upper rail (1) has a bell-shaped cross-sectional configuration forming a cavity (7), wherein the cavity (7) is configured for embracing the upper flange (6a).

7. The seat rail system (S) according to claim 6,
**characterized in that** the upper rail (1) comprises a first side section (8a) and a second side section (8b) joined to each other, wherein the cavity (7) is formed between the first side section (8a) and the second side section (8b), wherein the first side section (8a) comprises a lateral inwardly projecting first flange (9a) and the second side section (8b) comprises a lateral inwardly projecting second flange (9b), wherein the first flange (9a) and the second flange (9b) are arranged below the upper flange (6a) and configured for being in engagement with the upper flange (6a) in the vehicle impact event.

8. The seat rail system (S) according to any preceding claim,
**characterized in that** the one or more lower parts (5b) of the load member (5) have lower T-shaped cross-sectional configurations with a laterally extending lower flange (6b), wherein the lower flange (6b) is configured for being in engagement with the floor structure (3) in the vehicle impact event.

9. The seat rail system (S) according to any of claims 5 to 7 and claim 8,
**characterized in that** the load member (5) comprises two joined material sections (5:1,5:2) forming the upper and lower T-shaped cross-sectional configurations, wherein the material sections (5:1,5:2) each at least partly has a U-shape like cross-sectional configuration.

10. The seat rail system (S) according to any preceding claims,
**characterized in that** the seat rail system (S) further comprises laterally extending bearing structures (10), wherein the bearing structures (10) are attached to the upper rail (1) and extending in opposite directions from the upper rail (1), wherein the bearing structures (10) are configured for movably engaging the lower rail (2).

11. The seat rail system (S) according to claim 10,
**characterized in that** the bearing structures (10) are positioned above a lower end (11) of the lower portion (1a) of the upper rail (1).

12. The seat rail system (S) according to claim 7 and 11,
**characterized in that** the lower end (11) is formed by the first flange (9a) and the second flange (9b).

13. The seat rail system (S) according to any of claims 10 to 12,
**characterized in that** the bearing structures (10) comprise bearings (10a), wherein the lower rail (2) comprises bearing surfaces (12) laterally arranged on opposite sides of the load member (5), wherein the bearings (10a) and the bearing surfaces (12) are configured for interacting with each other when the upper rail (1) is displaced in relation to the lower rail (2).

14. The seat rail system (S) according to any preceding claim,
**characterized in that** the floor structure (3) is an integrated structural part of a body-in-white structure of the vehicle (V).

15. A vehicle (V) comprising the seat rail system (S) according to any of claims 1-14.

## Patentansprüche

1. Sitzschienensystem (S) für ein Fahrzeug (V), wobei das Sitzschienensystem (S) eine obere Schiene (1) und eine stationäre untere Schiene (2), die an einer Bodenstruktur (3) des Fahrzeugs (V) angebracht ist, umfasst, wobei die obere Schiene (1) dazu konfiguriert ist, an einem Fahrzeugsitz (4) angebracht zu werden, wobei die obere Schiene (1) in Bezug auf die untere Schiene (2) in einer Fahrzeuglängsrichtung (D_{LO}) bewegbar angeordnet ist, wobei das Sitzschienensystem (S) ferner ein langgestrecktes Lastelement (5) umfasst, dass an der unteren Schiene (2) angebracht ist, wobei sich ein oberer Teil (5a) des Lastelements (5) in einen unteren Abschnitt (1a) der oberen Schiene (1) erstreckt,
**dadurch gekennzeichnet, dass** sich ein oder mehrere untere Teile (5b) des Lastelements (5) durch die Bodenstruktur (3) erstrecken, wobei das Lastelement (5) dazu konfiguriert ist, bei einem Fahrzeugaufprallereignis in direktem Eingriff mit der Bodenstruktur (3) und dem unteren Abschnitt (1a) zu stehen, um einen Lastpfad von der Bodenstruktur (3) zu der oberen Schiene (1) über das Lastelement (5) einzurichten.

2. Sitzschienensystem (S) nach Anspruch 1,
**dadurch gekennzeichnet, dass** sich der eine oder die mehreren unteren Teile (5b) des Lastelements (5) durch entsprechende Öffnungen (3a) der Bodenstruktur (3) erstrecken.

3. Sitzschienensystem (S) nach Anspruch 1 oder 2,
**dadurch gekennzeichnet, dass** der eine oder die mehreren unteren Teile (5b) des Lastelements (5) dazu konfiguriert sind, bei dem Fahrzeugaufprallereignis in Eingriff mit einer unteren Fläche (3b) der Bodenstruktur (3) zu stehen.

4. Sitzschienensystem (S) nach einem der vorhergehenden Ansprüche,
**dadurch gekennzeichnet, dass** sich der eine oder die mehreren unteren Teile (5b) des Lastelements (5) durch einen unteren Teilbereich (2a) der unteren Schiene (2) erstrecken.

5. Sitzschienensystem (S) nach einem der vorhergehenden Ansprüche,
**dadurch gekennzeichnet, dass** der obere Teil (5a) des Lastelements (5) eine obere T-förmige Querschnittskonfiguration mit einem sich seitlich erstreckenden oberen Flansch (6a) aufweist, wobei der obere Flansch (6a) dazu konfiguriert ist, bei dem Fahrzeugaufprallereignis in Eingriff mit dem unteren Abschnitt (1a) der oberen Schiene (1) zu stehen.

6. Sitzschienensystem (S) nach Anspruch 5,
**dadurch gekennzeichnet, dass** der untere Abschnitt (1a) der oberen Schiene (1) eine glockenförmige Querschnittskonfiguration aufweist, die einen Hohlraum (7) bildet, wobei der Hohlraum (7) dazu konfiguriert ist, den oberen Flansch (6a) zu umschließen.

7. Sitzschienensystem (S) nach Anspruch 6,
**dadurch gekennzeichnet, dass** die obere Schiene (1) einen ersten Seitenteilbereich (8a) und einen zweiten Seitenteilbereich (8b) umfasst, die miteinander verbunden sind, wobei der Hohlraum (7) zwischen dem ersten Seitenteilbereich (8a) und dem zweiten Seitenteilbereich (8b) gebildet ist, wobei der erste Seitenteilbereich (8a) einen ersten nach innen vorstehenden seitlichen Flansch (9a) umfasst und der zweite Seitenteilbereich (8b) einen zweiten nach innen vorstehenden seitlichen Flansch (9b) umfasst, wobei der erste Flansch (9a) und der zweite Flansch (9b) unter dem oberen Flansch (6a) angeordnet und dazu konfiguriert sind, bei dem Fahrzeugaufprallereignis in Eingriff mit dem oberen Flansch (6a) zu stehen.

8. Sitzschienensystem (S) nach einem der vorhergehenden Ansprüche,
**dadurch gekennzeichnet, dass** der eine oder die mehreren unteren Teile (5b) des Lastelements (5) untere T-förmige Querschnittskonfigurationen mit einem sich seitlich erstreckenden unteren Flansch (6b) aufweisen, wobei der untere Flansch (6b) dazu konfiguriert ist, bei dem Fahrzeugaufprallereignis in Eingriff mit der Bodenstruktur (3) zu stehen.

9. Sitzschienensystem (S) nach einem der Ansprüche 5 bis 7 und Anspruch 8,
**dadurch gekennzeichnet, dass** das Lastelement (5) zwei verbundene Materialteilbereiche (5:1,5:2) umfasst, welche die oberen und die unteren T-förmigen Querschnittskonfigurationen bilden, wobei die Materialteilbereiche (5:1,5:2) jeweils mindestens teilweise eine U-förmige Querschnittskonfiguration aufweisen.

10. Sitzschienensystem (S) nach einem der vorhergehenden Ansprüche,
**dadurch gekennzeichnet, dass** das Sitzschienensystem (S) ferner sich seitlich erstreckende Lagerstrukturen (10) umfasst, wobei die Lagerstrukturen (10) an der oberen Schiene (1) angebracht sind und sich in entgegengesetzte Richtungen von der oberen Schiene (1) erstrecken, wobei die Lagerstrukturen (10) dazu konfiguriert sind, die untere Schiene (2) bewegbar in Eingriff zu nehmen.

11. Sitzschienensystem (S) nach Anspruch 10,
**dadurch gekennzeichnet, dass** die Lagerstrukturen (10) über einem unteren Ende (11) des unteren Abschnitts (1a) der oberen Schiene (1) positioniert sind.

12. Sitzschienensystem (S) nach Anspruch 7 und 11,
**dadurch gekennzeichnet, dass** das untere Ende (11) durch den ersten Flansch (9a) und den zweiten Flansch (9b) gebildet ist.

13. Sitzschienensystem (S) nach einem der Ansprüche 10 bis 12,
**dadurch gekennzeichnet, dass** die Lagerstrukturen (10) Lager (10a) umfassen, wobei die untere Schiene (2) Lagerflächen (12) umfasst, die seitlich auf gegenüberliegenden Seiten des Lastelements (5) angeordnet sind, wobei die Lager (10a) und die Lagerflächen (12) dazu konfiguriert sind, miteinander zu interagieren, wenn die obere Schiene (1) in Bezug auf die untere Schiene (2) verschoben wird.

14. Sitzschienensystem (S) nach einem der vorhergehenden Ansprüche,
**dadurch gekennzeichnet, dass** die Bodenstruktur (3) ein integriertes Strukturteil einer Rohkarosseriestruktur des Fahrzeugs (V) ist.

15. Fahrzeug (V), umfassend das Sitzschienensystem (S) nach einem der Ansprüche 1-14.

## Revendications

1. Système de rail de siège (S) pour un véhicule (V), dans lequel le système de rail de siège (S) comprend un rail supérieur (1) et un rail inférieur fixe (2) fixé à une structure de plancher (3) du véhicule (V), dans lequel le rail supérieur (1) est configuré pour être fixé à un siège de véhicule (4), dans lequel le rail supérieur (1) est disposé de manière mobile par rapport au rail inférieur (2) dans une direction longitudinale de véhicule (D_{LO}), dans lequel le système de rail de siège (S) comprend en outre un élément de charge allongé (5) fixé au rail inférieur (2), dans lequel une partie supérieure (5a) de l'élément de charge (5) s'étend dans une partie inférieure (1a) du rail supérieur (1),
**caractérisé en ce qu'**une ou plusieurs parties inférieures (5b) de l'élément de charge (5) s'étendent à travers la structure de plancher (3), dans lequel l'élément de charge (5) est configuré pour être directement en prise avec la structure de plancher (3) et la partie inférieure (1a) lors d'un événement d'impact de véhicule pour établir un chemin de charge de la structure de plancher (3) jusqu'au rail supérieur (1) via l'élément de charge (5).

2. Système de rail de siège (S) selon la revendication 1,
**caractérisé en ce que** la ou les plusieurs parties inférieures (5b) de l'élément de charge (5) s'étendent à travers des ouvertures correspondantes (3a) de la structure de plancher (3).

3. Système de rail de siège (S) selon la revendication 1 ou 2,
**caractérisé en ce que** la ou les plusieurs parties inférieures (5b) de l'élément de charge (5) sont configurées pour être en prise avec une surface inférieure (3b) de la structure de plancher (3) lors de l'événement d'impact de véhicule.

4. Système de rail de siège (S) selon une quelconque revendication précédente,
**caractérisé en ce que** la ou les plusieurs parties inférieures (5b) de l'élément de charge (5) s'étendent à travers une section inférieure (2a) du rail inférieur (2).

5. Système de rail de siège (S) selon une quelconque revendication précédente,
**caractérisé en ce que** la partie supérieure (5a) de l'élément de charge (5) a une configuration en coupe transversale supérieure en forme de T avec une bride supérieure s'étendant latéralement (6a), dans lequel la bride supérieure (6a) est configurée pour être en prise avec la partie inférieure (1a) du rail supérieur (1) lors de l'événement d'impact de véhicule.

6. Système de rail de siège (S) selon la revendication 5,
**caractérisé en ce que** la partie inférieure (1a) du rail supérieur (1) a une configuration en coupe transversale en forme de cloche formant une cavité (7), dans lequel la cavité (7) est configurée pour entourer la bride supérieure (6a).

7. Système de rail de siège (S) selon la revendication 6,
**caractérisé en ce que** le rail supérieur (1) comprend une première section latérale (8a) et une seconde section latérale (8b) reliées l'une à l'autre, dans lequel la cavité (7) est formée entre la première section latérale (8a) et la seconde section latérale (8b), dans lequel la première section latérale (8a) comprend une première bride latérale faisant saillie vers l'intérieur (9a) et la seconde section latérale (8b) comprend une seconde bride latérale faisant saillie vers l'intérieur (9b), dans lequel la première bride (9a) et la seconde bride (9b) sont disposées en dessous de la bride supérieure (6a) et configurées pour être en prise avec la bride supérieure (6a) lors de l'événement d'impact de véhicule.

8. Système de rail de siège (S) selon une quelconque revendication précédente,
**caractérisé en ce que** la ou les plusieurs parties inférieures (5b) de l'élément de charge (5) ont des configurations en coupe transversale inférieures en forme de T avec une bride inférieure s'étendant latéralement (6b), dans lequel la bride inférieure (6b) est configurée pour être en prise avec la structure de plancher (3) lors de l'événement d'impact de véhicule.

9. Système de rail de siège (S) selon l'une quelconque des revendications 5 à 7 et la revendication 8,
**caractérisé en ce que** l'élément de charge (5) comprend deux sections de matériau jointes (5:1, 5:2) formant les configurations en coupe transversale supérieure et inférieure en forme de T, dans lequel les sections de matériau (5:1, 5:2) présentent chacune au moins en partie une configuration en coupe transversale en forme de U.

10. Système de rail de siège (S) selon l'une quelconque des revendications précédentes,
**caractérisé en ce que** le système de rail de siège (S) comprend en outre des structures de roulement (10) s'étendant latéralement, dans lequel les structures de roulement (10) sont fixées au rail supérieur (1) et s'étendent dans des directions opposées à partir du rail supérieur (1), dans lequel les structures de roulement (10) sont configurées pour venir en prise de manière mobile avec le rail inférieur (2).

11. Système de rail de siège (S) selon la revendication 10,
**caractérisé en ce que** les structures de roulement (10) sont positionnées au-dessus d'une extrémité inférieure (11) de la partie inférieure (1a) du rail supérieur (1).

12. Système de rail de siège (S) selon les revendications 7 et 11,
**caractérisé en ce que** l'extrémité inférieure (11) est formée par la première bride (9a) et la seconde bride (9b).

13. Système de rail de siège (S) selon l'une quelconque des revendications 10 à 12,
**caractérisé en ce que** les structures de roulement (10) comprennent des roulements (10a), dans lequel le rail inférieur (2) comprend des surfaces de roulement (12) disposées latéralement sur des côtés opposés de l'élément de charge (5), dans lequel les roulements (10a) et les surfaces de roulement (12) sont configurés pour interagir les uns avec les autres lorsque le rail supérieur (1) est déplacé par rapport au rail inférieur (2).

14. Système de rail de siège (S) selon une quelconque revendication précédente,
**caractérisé en ce que** la structure de plancher (3) est une partie structurelle intégrée d'une structure de carrosserie brute du véhicule (V).

15. Véhicule (V) comprenant le système de rail de siège (S) selon l'une quelconque des revendications 1 à 14.
